# EUROPEAN PATENT SPECIFICATION

(11) **EP 3 827 965 B1**
(45) Date of publication and mention of the grant of the patent: **03.07.2024**
(21) Application number: 19840898.1
(22) Date of filing: 25.07.2019
(51) Int. Cl.: B29C 63/42, B29C 61/06, B32B 27/28, B32B 27/32, B29C 49/22

(54) **HEAT-SHRINKABLE PLASTIC MEMBER, COMPOSITE PREFORM, AND COMPOSITE CONTAINER**
WÄRMESCHRUMPFBARES KUNSTSTOFFELEMENT, VERBUNDVORFORMLING UND VERBUNDBEHÄLTER
ÉLÉMENT PLASTIQUE THERMORÉTRACTABLE, PRÉFORME COMPOSITE ET RÉCIPIENT EN COMPOSITE

(30) Priority: 26.07.2018 JP 2018140763
(43) Date of publication of application: 02.06.2021
(73) Proprietor: DAI NIPPON PRINTING CO., LTD., Tokyo-to 162-8001 (JP)
(72) Inventor: IKEDA, Keita, Tokyo 100-8251 (JP); ODAWARA, Koji, Tokyo 100-8251 (JP); MIWA, Masaki, Tokyo 100-8251 (JP); HASHIMOTO, Daichi, Tokyo 162-8001 (JP); SUGA, Yusuke, Tokyo 162-8001 (JP); MIYAWAKI, Takuma, Tokyo 162-8001 (JP)
(74) Representative: Müller-Boré & Partner Patentanwälte PartG mbB
(86) International application number: PCT/JP2019/029221
(87) International publication number: WO 2020/022432

(56) References cited:
- WO-A1-2005/059026
- JP-A- H11 170 365
- JP-A- 2002 292 737
- JP-A- 2005 014 428
- JP-A- 2017 047 554

## Description

### Technical Field

The present invention relates to a heat-shrinkable plastic element, a composite preform including the heat-shrinkable plastic element, and a composite container that is a blow-molded product of the composite preform.

### Background Art

A plastic container has come into common use recently as a container for keeping fluid of food and drink etc. therein.

Such a plastic container for keeping fluid therein can be produced by inserting a preform into a metal mold, and then biaxial stretch-blow molding this preform (biaxial stretch blow molding).

For example, preforms including a monolayer material, a multilayer material, or a blend material of polyethylene terephthalate (PET), polypropylene (PP), etc. are conventionally used for production of plastic containers.

Commonly, a preform is just molded into a container in conventional biaxial stretch-blow molding, which limits means for obtaining a container having various functions and characteristics (such as barrier properties and heat-retaining properties) to, for example, change of a material constituting the preform. It is especially difficult to obtain a container including portions (such as a body part and a bottom part) having different functions and characteristics.

PTL 1 discloses a composite container including a container body and a heat-shrinkable plastic element. This is obtained by blow-molding a composite preform. This composite preform can be produced by inserting a preform into the heat-shrinkable plastic element, and heating them. The insertion of a preform into a heat-shrinkable plastic element demands skilled techniques. PTL 2 describes a heat-shrinkable film and a heat-shrinkable multilayer film which are excellent in heat resistance, rigidity, and low-temperature shrinkage, and further have a balance of transparency and impact resistance.

### Citation List

### Patent Literature

PTL 1: JP 2015 128858 A
PTL 2: WO 2005/059026 A1

### Summary of Invention

### Technical Problem

Lately, the inventors of the present invention have found that a heat-shrinkable plastic element containing (A) an ionomer resin and (B) an olefin resin as essential constituents can notably improve insertability of a preform thereinto, which can improve production efficiency of a composite preform and a composite container.

An object of the present invention is thus to provide a heat-shrinkable plastic element that can notably improve insertability of a preform.

Another object of the present invention is to provide a composite preform including this heat-shrinkable plastic element, and a composite container that is a blow-molded product of the composite preform.

### Solution to Problem

A heat-shrinkable plastic element according to the present invention comprises: at least a layer containing (A) an ionomer resin and (B) an olefin resin as essential constituents.

In one embodiment, the heat-shrinkable plastic element according to the present invention has a storage modulus at 25°C of at least 4.0×10⁸ Pa.

A composite preform according to the present invention comprises: a preform that includes a mouth part, a body part linked to the mouth part, and a bottom part linked to the body part; and the heat-shrinkable plastic element, which is fit to be disposed on the outside of the preform.

In one embodiment, in the composite preform according to the present invention, the dynamic friction coefficient between the heat-shrinkable plastic element and the preform is at most 1.1.

In one embodiment, in the composite preform according to the present invention, the static friction coefficient between the heat-shrinkable plastic element and the preform is at most 1.1.

A composite container according to the present invention is a blow-molded product of the composite preform, and comprises: a container body including a mouth part, a neck part disposed underneath the mouth part, a shoulder part disposed underneath the neck part, a body part disposed underneath the shoulder part, and a bottom part disposed underneath the body part; and a heat-shrinkable plastic element that is fit to be disposed on the outside of the container body.

### Advantageous Effects of Invention

The heat-shrinkable plastic element according to the present invention can notably improve insertability of a preform, which can improve production efficiency of a composite preform and a composite container.

### Brief Description of Drawings

[Fig. 1] Fig. 1 is a front view showing one embodiment of a heat-shrinkable plastic element 40a according to the present invention.
[Fig. 2] Fig. 2 is a front view showing one embodiment of the heat-shrinkable plastic element 40a according to the present invention.
[Fig. 3] Fig. 3 is a schematically cross-sectional view showing one embodiment of a composite preform 70 according to the present invention.
[Fig. 4] Fig. 4 is a schematically cross-sectional view showing one embodiment of the composite preform 70 according to the present invention.
[Fig. 5] Fig. 5 is a perspective view showing one embodiment of the composite preform 70 according to the present invention.
[Fig. 6] Fig. 6 is a front view showing one embodiment of the heat-shrinkable plastic element 40a according to the present invention.
[Fig. 7] Fig. 7 is a front view showing one embodiment of a preform 10a.
[Fig. 8] Fig. 8 is a schematically cross-sectional view showing one embodiment of a composite container 10A according to the present invention.
[Fig. 9] Fig. 9 is a schematically cross-sectional view showing one embodiment of the composite container 10A according to the present invention.
[Fig. 10] Fig. 10 is a schematically cross-sectional view showing one embodiment of the composite container 10A according to the present invention.
[Fig. 11] Fig. 11 is a schematic view showing one embodiment of a method for producing the composite container 10A.

### Description of Embodiments

Hereinafter the embodiments of the present invention will be described in detail. The present invention is not limited to the following embodiments, but is also enabled by any modifications as long as not deviating from the gist thereof.

A heat-shrinkable plastic element according to the present invention at least has a characteristic such as to be shrunk by heating. It is not always essential to heat-shrink the heat-shrinkable plastic element according to the present invention when a preform is provided with this heat-shrinkable plastic element at least on part of the outside thereof to produce a composite preform. There is a case where a heat-shrinkable plastic element has no heat-shrinkability already when the heat-shrinkable plastic element constitutes a composite container. Constituent elements in such a case are also encompassed in the heat-shrinkable plastic element according to the present invention.

The heat-shrinkable plastic element according to the present invention has a shape not limited, but usually is in the form of a film (sheet), and as described later, may be in the form of a cylindrical film, that is, a tube.

### <Heat-shrinkable plastic element 40a>

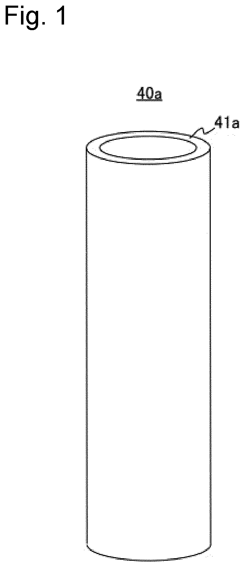

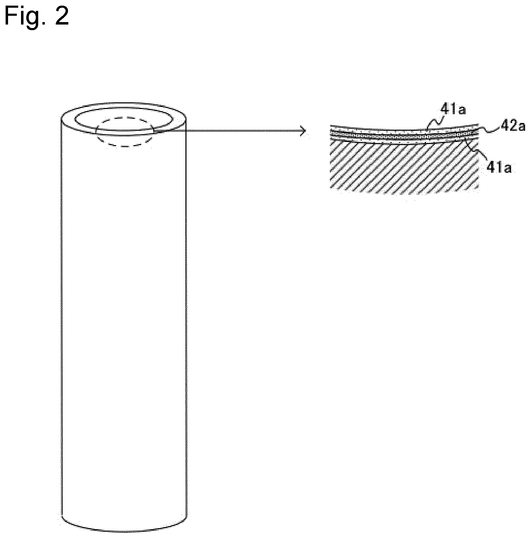

A heat-shrinkable plastic element 40a according to the present invention has a feature of including at least a layer 41a that contains (A) an ionomer resin and (B) an olefin resin as essential constituents. The heat-shrinkable plastic element 40a according to the present invention may have, as shown in Fig. 1, a monolayer structure that is formed of a layer containing (A) the ionomer resin and (B) the olefin resin as essential constituents, and may have, as shown in Fig. 2, a multilayer structure that includes another layer 42a. The heat-shrinkable plastic element 40a having a multilayer structure may include two or more layers 41a each containing (A) the ionomer resin and (B) the olefin resin as essential constituents.

The summary of the technical concept of the present invention will be described as follows. The present invention is not limited to the scope of the following technical concept only.

Conventionally, the method of injection-molding polyethylene terephthalate (PET) to obtain a preform, blow-molding this preform to shape a bottle in advance, and thereafter winding a heat-shrinkable film (tube) around the preform has been frequently used. In this case, as the heat-shrinkable film, a polystyrene resin or a polyester resin is mainly used but a polyolefin resin is seldom used. This is because use of a polyolefin resin as the heat-shrinkable film leads to low friction between the heat-shrunk film and the bottle, which makes it difficult to sufficiently fix them.

The inventors of the present invention found that use of a polystyrene resin or a polyester resin as a heat-shrinkable film presents a problem in the method of winding the heat-shrinkable film (tube) around a preform in advance, and thereafter blow-molding the preform and the heat-shrinkable film at once. Specifically, it was difficult to wind the heat-shrinkable film around the preform (in a case of a tube, to insert the preform) due to too great contact resistance of the heat-shrinkable film and the preform. In addition, the preform and a polyester resin were fit to each other in the molding, which made it difficult to crush and sort a composite container.

Then, (B) the olefin resin that had not come into common use was used for the heat-shrinkable film. As a result, it was found that the contact resistance of the heat-shrinkable film and the preform is improved. Just the heat-shrinkable plastic element constituted of (B) the olefin resin only led to not only insufficient blow moldability thereafter, but also still insufficient tracking of the bottle body after the blow molding. Then, it was found that use of (B) the olefin resin and (A) the ionomer resin together leads to excellent blow moldability as the effect of improving the contact resistance of the heat-shrinkable film and the preform is maintained, and further leads to excellent tracking of the bottle body after the blow molding.

Since dissociating into ions at high temperature, the ionomer resin is softened in a heating state when the preform is blow-molded, which contributes to improvement in moldability. In contrast, the ionomer resin forms an ionic bond again after cooled, which improves physical properties, and results in interaction with a polar portion of a polyethylene terephthalate resin that forms the bottle body, which can contribute to improvement in fixation strength. Due to such a polar interaction, for example, the composite container can be easily separated when crushed to be sorted.

The layer 41a, which contains (A) the ionomer resin and (B) the olefin resin as essential constituents, contains the ionomer resin preferably in an amount of 40 mass% to 99 mass%, more preferably in an amount more than 60 mass% and at most 98.5 mass%, further preferably in an amount of 80 mass% to 98 mass%, and especially preferably in an amount of 85 mass% to 97 mass%. The content of the ionomer resin within the foregoing numeral range can improve recyclability when the heat-shrinkable plastic element 40a is separated and removed from a container body 10, and in addition, makes it possible to more easily thermocompression-bonding one end of the heat-shrinkable plastic element 40a when a thermocompression bonding step is included.

The layer 41a contains (B) the olefin resin preferably in an amount of 1 mass% to 60 mass%, more preferably in an amount of 1.5 mass% to 40 mass%, further preferably in an amount of 2 mass% to 20 mass%, and especially preferably in an amount of 3 mass% to 15 mass%.

In one embodiment, the heat-shrinkable plastic element 40a includes the layer 41a, which contains (A) the ionomer resin and (B) the olefin resin as essential constituents.

Use of (A) the ionomer resin and (B) the olefin resin as essential constituents can lead to achievement of the heat-shrinkable plastic element having a storage modulus and a dynamic friction coefficient within specific ranges, and further leads to excellent transparency due to good miscibility of (A) the ionomer resin and (B) the olefin resin, which leads to excellent productivity of the heat-shrinkable plastic element, which are preferable.

### ((A) Ionomer resin)

For example, resins obtained by crosslinking molecules of an ethylene-unsaturated carboxylic acid copolymer such as an ethylene-methacrylic acid copolymer via a metal ion can be used as (A) the ionomer resin without any particular limitations. Sodium, zinc, magnesium, lithium, etc. can be used as the metal ion used for the ionomer resin without any particular limitations.
(A) The ionomer resin preferably has a melt flow rate of 0.6 to 1.0 g/10 min.: the melt flow rate is measured conforming to ISO 1133 (190°C in temperature, 21.17 N in load). (A) The ionomer resin having a melt flow rate within the foregoing range leads to excellent productivity of the heat-shrinkable plastic element.

The lower limit of the storage modulus (25°C) of (A) the ionomer resin, which is measured conforming to JIS K7244-4, is preferably at least 1.5×10⁸ Pa, more preferably at least 2.0×10⁸ Pa, and further preferably at least 2.5×10⁸ Pa. The storage modulus (25°C) of (A) the ionomer resin within the foregoing range leads to excellent stability of production when the heat-shrinkable plastic element is molded, and excellent insertability when the preform is covered with the heat-shrinkable plastic element.

### ((B) Olefin resin)

A polypropylene resin is preferable, and for example, polypropylene homopolymers, polypropylene block copolymers, and polypropylene random copolymers can be preferably used as (B) the olefin resin without any particular limitations. Particularly, in view of miscibility with (A) the ionomer resin, random copolymers obtained by copolymerization with a C₂₋₁₀ (excluding C₃) α-olefin are preferable, and random copolymers obtained by polymerization using a metallocene catalyst are more preferable, among polypropylene resins.

The polypropylene resin preferably has a melt flow rate of 4 to 9 g/10 min., which is more preferably 6 to 8 g/10 min.: the melt flow rate is measured conforming to ISO 1133 (230°C in temperature, 21.17 N in load). The polypropylene resin having a melt flow rate within the foregoing range leads to excellent productivity of the heat-shrinkable plastic element.

The polypropylene resin preferably has a storage modulus (25°C) of 7.0×10⁸ to 2.0×10⁹ Pa, which is more preferably 9.0×10⁸ to 1.5×10⁹ Pa: the storage modulus is measured conforming to JIS K7244-4. The polypropylene resin having a storage modulus (25°C) of the foregoing range leads to excellent insertability when the preform is covered with the heat-shrinkable plastic element.

### (Other constituents)

The layer 41a may contain any thermoplastic resin other than (A) the ionomer resin and (B) the olefin resin which is preferably a resin material of an olefin resin other than (B) the olefin resin, such as polyethylene resins, cyclic olefin copolymers, and ethylene-vinyl acetate copolymers, in view of miscibility with (A) the ionomer resin and (B) the olefin resin.

The layer 41a containing (A) the ionomer resin and (B) the olefin resin as essential constituents may contain at least two of the foregoing resin materials as the other constituents, and other than them, may contain any additive such as a plasticizer, a filler, an ultraviolet stabilizer, an anti-coloring agent, a fluorescent brightening agent, a flatting agent, a deodorizer, a flame retardant, a weathering agent, an antistatic agent, a fiber friction modifier, a slip agent, a release agent, an antioxidant, an ion exchanger, a dispersing agent, and an ultraviolet absorber.

### (Shape of heat-shrinkable plastic element)

In one embodiment, the heat-shrinkable plastic element 40a has, as shown in Figs. 1 and 2, a cylindrical shape without a bottom.

The heat-shrinkable plastic element 40a has an inner diameter that can be optimized according to the shape and size of the preform, but preferably has an inner diameter of 22 mm to 65 mm, which is more preferably 24 mm to 60 mm. The heat-shrinkable plastic element 40a having an inner diameter within the foregoing numeral range makes it possible to more easily insert a preform 10a which will be described later, to improve production efficiency of a composite preform 70.

The heat-shrinkable plastic element 40a preferably has a thickness of 200 µm to 500 µm, which is more preferably 220 µm to 400 µm, and is further preferably 250 µm to 350 µm. The heat-shrinkable plastic element 40a having a thickness within the foregoing numeral range makes it possible to more easily insert the preform 10a. Here, when the heat-shrinkable plastic element 40a has a multilayer structure, the foregoing numeral values each mean the thickness of all the layers in total.

When the heat-shrinkable plastic element 40a has a multilayer structure, the structure preferably includes a layer containing (A) the ionomer resin and (B) the olefin resin, a gas-barrier layer, and a layer containing (A) the ionomer resin and (B) the olefin resin in order from the inside.

For example, a layer containing a resin having gas-barrier properties, such as ethylene-vinyl alcohol copolymers, Nylon-MXD6, and cyclopolyolefins can be used as the gas-barrier layer. As an ethylene-vinyl alcohol copolymer, EVAL (manufactured by Kuraray Co., Ltd.), Soarnol (manufactured by Mitsubishi Chemical Corporation), and the like can be used.

As other embodiments, the structure may be a two-layer structure of a layer containing (A) the ionomer resin and (B) the olefin resin, and the gas-barrier layer. The structure may be also such as to include a layer containing (A) the ionomer resin and (B) the olefin resin, the gas-barrier layer, and any other layer. In such structures, a side to be in contact with the preform is preferably provided with any layer containing (A) the ionomer resin and (B) the olefin resin.

Preferably, an adhesive layer is further included between any layer containing (A) the ionomer resin and (B) the olefin resin, and the gas-barrier layer. As the adhesive layer, for example, ADMER (manufactured by Mitsui Chemicals, Inc.) and MODIC (manufactured by Mitsubishi Chemical Corporation), which are polyolefin adhesive resins, can be used.

When the heat-shrinkable plastic element 40a has a multilayer structure as described above, any layer containing (A) the ionomer resin and (B) the olefin resin has a thickness that is not particularly limited but is preferably 40 to 200 µm in view of tracking of the container after the blow molding.

The gas-barrier layer preferably has a thickness of 20 to 60 µm, which is more preferably 25 to 60 µm, and further preferably 30 to 60 µm, in order to obtain excellent gas-barrier properties.

### (Storage modulus of heat-shrinkable plastic element)

The heat-shrinkable plastic element 40a preferably has a storage modulus at 25°C of 4.0×10⁸ Pa to 1.0×10⁹ Pa, which is more preferably 4.5×10⁸ Pa to 9.0×10⁸ Pa, and further preferably 5.0×10⁸ Pa to 8.0×10⁸ Pa. The heat-shrinkable plastic element having a storage modulus (25°C) within the foregoing range leads to excellent insertability when the preform is inserted into the heat-shrinkable plastic element 40a.

In the present invention, the storage modulus of the heat-shrinkable plastic element 40a can be measured according to the method conforming to JIS K7244-4.

The storage modulus of the heat-shrinkable plastic element 40a can be adjusted by the types of (A) the ionomer resin and (B) the olefin resin, optimization of the melt flow rates, or the mixing ratio of these resins, or the like.

### (Dynamic friction coefficient of heat-shrinkable plastic element)

It is necessary that the dynamic friction coefficient between the heat-shrinkable plastic element 40a and the preform 10a described later is at most 1.1. This dynamic friction coefficient is more preferably at most 1.0, and further preferably at most 0.6. The lower limit of this dynamic friction coefficient is not particularly limited, but is preferably at least 0.3, and further preferably at least 0.4. The dynamic friction coefficient between the heat-shrinkable plastic element and the preform within the foregoing range makes it possible to insert the preform into the heat shrinkable plastic element without any resistance.

The dynamic friction coefficient between the heat-shrinkable plastic element 40a and the preform 10a may be the same as, or may be different in both faces (inner and outer faces in the case of a tubular shape). This dynamic friction coefficient has only to satisfy the foregoing at least on one of the faces. This dynamic friction coefficient preferably satisfies the foregoing at least on the inner face when the heat-shrinkable plastic element 40a is in the form of a tube.

The dynamic friction coefficient between the heat-shrinkable plastic element 40a and the preform 10a can be measured at 23°C by the method conforming to JIS-K7125.

The preform 10a is preferably constituted of polyethylene terephthalate. The dynamic friction coefficient between the plastic element 40a and the polyethylene terephthalate is preferably the same as the foregoing.

### (Static friction coefficient of heat-shrinkable plastic element)

The static friction coefficient between the heat-shrinkable plastic element 40a and the preform 10a described later is preferably at most 1.1, more preferably at most 1.0, and further preferably at most 0.8. The lower limit of this static friction coefficient is not particularly limited, but is preferably at least 0.3, and further preferably at least 0.4. The static friction coefficient between the heat-shrinkable plastic element and the preform within the foregoing range makes it easy to determine an insertion position when the preform is inserted into the heat shrinkable plastic element.

The static friction coefficient between the heat-shrinkable plastic element 40a and the preform 10a may be the same as, or may be different in both faces (inner and outer faces in the case of a tubular shape). The static friction coefficient has only to satisfy the foregoing at least on one of the faces. The static friction coefficient preferably satisfies the foregoing at least on the inner face when the heat-shrinkable plastic element 40a is in the form of a tube.

The static friction coefficient between the heat-shrinkable plastic element 40a and the preform 10a can be measured at 23°C by the method conforming to JIS K7125.

The preform 10a is preferably constituted of polyethylene terephthalate. The static friction coefficient between the plastic element 40a and the polyethylene terephthalate is preferably the same as the foregoing.

The heat-shrinkable plastic element 40a has a specific gravity at 23°C lower than 1.0, which is more preferably lower than 0.99. The heat-shrinkable plastic element 40a having a specific gravity lower than 1 makes it possible to separate the heat-shrinkable plastic element 40a using the difference in their specific gravity when the heat-shrinkable plastic element 40a is separated and removed from the container body 10.

### <Method for producing heat-shrinkable plastic element 40a>

In one embodiment, the heat-shrinkable plastic element 40a can be produced using various conventionally known methods. Particularly non-limited but preferred methods thereof include the method of melting various raw materials using a single screw extruder to extrude a non-elongated tube using an annular die or a multilayer annular die, and then elongating the tube to obtain a seamless heat-shrinkable tube. Other than this, the method of pasting a film that is extruded and elongated using a T-die, by fusing, welding, adhering, or the like, to shape a tube, further the method of spirally pasting the foregoing film to shape a tube, etc. can be given.

Here, the method of extruding a non-elongated tube using an annular die or a multilayer annular die, and then elongating the tube to obtain a heat-shrinkable tube will be further described in detail. The foregoing various raw materials are heated and melted by a melt extruder, continuously extruded via an annular die or a multilayer annular die, and thereafter forcibly cooled to be molded into a non-elongated tube. The method of immersion in water at low temperature, the method of using cool air, and the like can be used as a means for the forced cooling. Among them, the method of immersion in water at low temperature gives high cooling efficiency, and is effective. This non-elongated tube may be continuously fed to the following elongating step. Or, a roll of this non-elongated tube after the tube is wound once in the form of a roll may be used as a master roll for the following elongating step. The method of continuously feeding the non-elongated tube to the following elongating step is preferable in view of production efficiency and thermal efficiency.

The non-elongated tube obtained as described above is pressurized by compressed gas from the inside thereof, to be elongated. The elongating method is not particularly limited. For example, as pressure by compressed gas is applied via one end of the non-elongated tube to the inside thereof, the tube is fed at a fixed rate, next heated by hot water, an infrared heater, or the like, and passed through a cooled cylindrical tube for regulating the drawing ratio in a transverse direction (TD) with respect to the machine direction, to be elongated at the fixed ratio. Temperature conditions etc. are adjusted so that the tube is elongated in a suitable place in the cylindrical tube. The elongated tube cooled in the cylindrical tube is held by a pair of nip rolls to be drawn as the drawing tension is retained, and wound as an elongated tube. The tube may be elongated priorly in the machine direction (MD), or priorly in the transverse direction (TD) with respect to the machine direction, but is preferably elongated in both directions at the same time.

The elongation conditions are adjusted according to characteristics of the used resin compositions, the thermal shrinkage to be aimed, etc.

The drawing ratio in the machine direction (MD) is determined by the ratio of the feeding rate of the non-elongated tube, and the rate of the elongated tube passing through the nip rolls. The drawing ratio in the transverse direction (TD) with respect to the machine direction is determined by the ratio of an outer diameter of the non-elongated tube, and an outer diameter of the elongated tube. For an elongating and pressurizing method other than this, the method of holding both the non-elongated tube on the feeding side and the elongated tube on the drawing side by nip rolls, to keep the internal pressure of compressed gas enclosed therein can be employed.

A heat shrinkable tube (heat-shrinkable plastic element) according to the present invention is made by elongating the non-elongated tube in the transverse direction (TD) with respect to the machine direction, and in the machine direction (MD). The drawing ratio in the transverse direction (TD) with respect to the machine direction is preferably 1.4 to 2.0 times, and more preferably 1.5 to 1.8 times. In the machine direction (MD), the tube does not necessarily elongate, but is preferably obtained by elongation at a drawing ratio within the range of preferably 1.02 times and 1.25 times that is preferably 1.17 times.

Here, the drawing ratio in the transverse direction (TD) with respect to the machine direction of the heat-shrinkable tube of at least 1.4 times can lead to a shrinkage enough for the preform to be covered, and the drawing ratio thereof of at most 2.0 times can suppress temperature non-uniformity in a covering furnace, and non-uniformity of shrinkage of the tube according to a direction of intruding the covering furnace. In contrast, the drawing ratio in the machine direction (MD) of the heat-shrinkable tube of at most 1.25 times leads to a suitable shrinkage in the machine direction (MD), which does not lead to misposition due to shrinkage in covering, which makes it possible to shorten an extra length of the tube before covering (before shrinkage), which can also suppress a cost increase.

The shrinkage in the machine direction (MD) of the heat-shrinkable plastic element, which is made as described above, is preferably 3 to 20%, and more preferably 5 to 15%. The shrinkage in the transverse direction (TD) with respect to the machine direction is preferably 30 to 50%, and more preferably 35 to 45%. The shrinkages in the machine direction (MD) of the heat-shrinkable plastic element, and in the transverse direction (TD) with respect to the machine direction within the foregoing ranges lead to the heat-shrinkable plastic element fit to the preform all over from a mouth part to a bottom part of the preform when the preform is covered with the heat-shrinkable plastic element, which leads to excellent finishing properties.

### <Composite preform 70>

The composite preform 70 according to the present invention has a feature of including the preform 10a, and the heat-shrinkable plastic element 40a, which is fit to be disposed on the outside of the preform 10a.

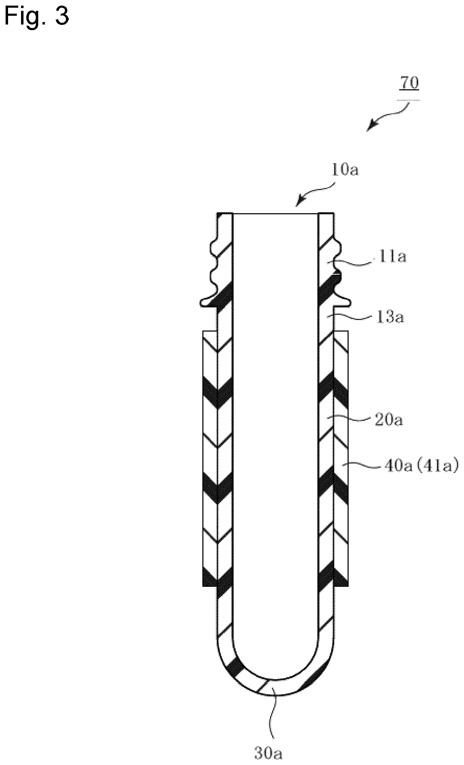

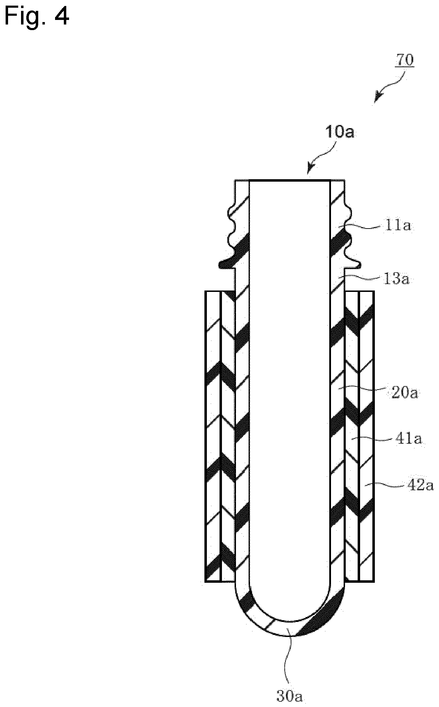

The preform 10a included in the composite preform 70 includes, as shown in Figs. 3 and 4, a mouth part 11a, a body part 20a that is linked to the mouth part 11a, and a bottom part 30a that is linked to the body part 20a. Among them, the mouth part 11a corresponds to a mouth part 11 of the container body 10, which will be described later, and has approximately the same shape as the mouth part 11.

The body part 20a corresponds to a neck part 13, a shoulder part 12, and a body part 20 of the foregoing container body 10, and has approximately a cylindrical shape. The bottom part 30a corresponds to a bottom part 30 of the foregoing container body 10, and has approximately a hemispherical shape.

In one embodiment, the preform 10a is constituted of a resin material. Examples of the resin material include polyamide resins, polyester resins, polyolefin resins, cellulose resins, and vinyl resins. Among them, polyethylene terephthalate is more preferably used. The preform 10a may contain two or more of the foregoing resin materials.

The preform 10a may contain, for example, a red, blue, yellow, green, brown, black, or white coloring agent, but is preferably colorless and transparent without such a coloring agent in view of recyclability.

The preform 10a can contain additives such as a plasticizer, a filler, an ultraviolet stabilizer, an anti-coloring agent, a fluorescent brightening agent, a flatting agent, a deodorizer, a flame retardant, a weathering agent, an antistatic agent, a fiber friction modifier, a slip agent, a release agent, an antioxidant, an ion exchanger, a dispersing agent, and an ultraviolet absorber.

The preform 10a may have a monolayer structure, or may have a multilayer structure.

For example, the preform 10a can be formed of three or more layers as including a layer constituted of a resin having gas barrier properties and/or a resin having light blocking effect, such as Nylon-MXD6, Nylon-MXD6 + a fatty acid salt, polyglycolic acid (PGA), ethylene-vinyl alcohol copolymers (EVOH), and polyethylene naphthalate (PEN), as a middle layer.

The preform 10a preferably has an outer diameter of 20 mm to 50 mm, which is more preferably 25 to 45 mm. The preform 10a having an outer diameter within the foregoing numeral range can realize easier insertion into the heat-shrinkable plastic element 40a, to improve productivity of the composite preform 70.

The material constituting the heat-shrinkable plastic element 40a, and the thickness of the heat-shrinkable plastic element 40a are as described above.

As shown in Fig. 3, the heat-shrinkable plastic element 40a is attached to the outer face of the preform 10a without adhesion, and is fit so as not to move or rotate with respect to the preform 10a, or so as not to drop by a dead load thereof. The plastic element 40a is disposed in all over the circumferential direction of the preform 10a so as to surround the preform 10a, and has a horizontally circular cross section.

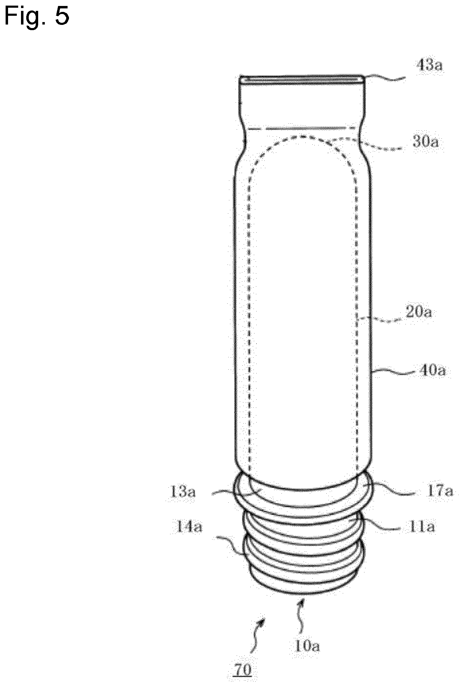

One end of the heat-shrinkable plastic element 40a may be thermocompression-bonded, to form a bottom part 43a (see Fig. 5).

### <Method for producing composite preform 70>

A method for producing the composite preform 70 includes the steps of: preparing the preform 10a and the heat-shrinkable plastic element 40a; inserting the preform 10a through one end of the heat-shrinkable plastic element 40a; and heating and heat-shrinking the heat-shrinkable plastic element 40a, and fitting the heat-shrinkable plastic element 40a to the preform 10a.

In one embodiment, the method for producing the composite preform 70 according to the present invention includes the step of thermocompression-bonding one end of the heat-shrinkable plastic element 40a.

### (Step of preparing preform 10a and heat-shrinkable plastic element 40a)

The preform 10a can be made by injection-molding the foregoing resin materials etc. using a conventionally known injection molding machine.

The method for making the heat-shrinkable plastic element 40a is as described above.

### (Inserting step)

In the inserting step, the preform 10a is inserted through one end of the heat-shrinkable plastic element 40a. This step may be carried out manually, or mechanically. There is no regulations on how to carry out the inserting step: for example, either or both of the heat-shrinkable plastic element 40a and the preform 10a is/are moved, to carry out this step.

The bottom part 30a of the preform 10a is inserted into an opening part of the one end of the heat-shrinkable plastic element 40a. To what extent the bottom part 30a is inserted varies according to the lengths of the preform 10a and the heat-shrinkable plastic element 40a, or a desired shape of the product. The bottom part 30a of the preform 10a is inserted to the extent as to be exposed from the opening part at the other end of the element 40a, other than the case where one end of the heat-shrinkable plastic element 40a is thermocompression-bonded as shown in Fig. 5.

### (Heating step)

The method of heating the heat-shrinkable plastic element 40a is not particularly limited, and can be suitably carried out using infrared radiation, hot air, etc. The heating temperature is preferably 60°C to 250°C, and more preferably 80°C to 150°C. The heating temperature is the surface temperature of the heat-shrinkable plastic element 40a in the heating, but not a setting temperature of infrared radiation, hot air, etc. This heating step is not essential. For example, when the preform 10a and the heat-shrinkable plastic element 40a are fit to each other so as not to be mispositioned, the heating step is not always necessary.

### (Thermocompression bonding step)

In one embodiment, the method according to the present invention may include the step of thermocompression-bonding one end of the heat-shrinkable plastic element 40a. Including such a step makes it possible to completely cover the bottom part 30a of the preform 10a, moreover the bottom part 30 of the container body 10 after the blow molding, with the heat-shrinkable plastic element 40a.

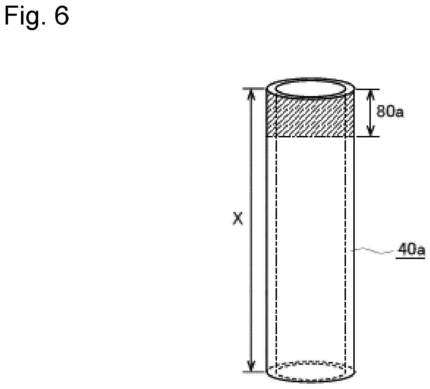

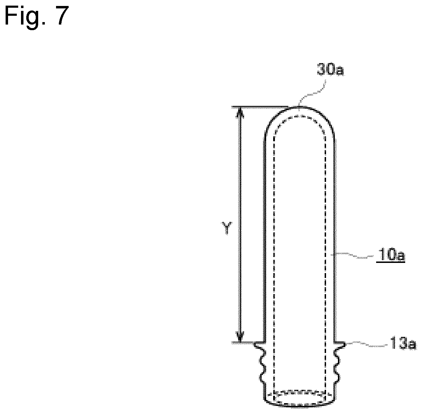

Specifically, the heat-shrinkable plastic element 40a (see Fig. 6) is made so as to have a length X longer than a length Y from the neck part 13a to the bottom part 30a of the preform 10a (see Fig. 7), that is, so that the one end of the heat-shrinkable plastic element 40a is provided with a margin part 80a. This margin part 80a is thermocompression-bonded, which can lead to formation of the bottom part 43a.

The margin part 80a preferably has a length of at least 3 mm, which is more preferably 5 mm to 20 mm.

The thermocompression bonding method is not particularly limited as long as the margin part, which is heated by infrared radiation, hot air, or the like, can be, for example, held to be compression-bonded. For example, a metal tool and a heat-resistant resin tool (hereinafter may be referred to as "compression bonding tool") can be used, and may be used in combination. The surface of this compression bonding tool may be flat, or may partly or entirely have a rough shape.

The compression bonding tool may have a heating mechanism on the surface thereof. This can improve compression bonding strength of the margin part 80a more. The heating temperature of the surface of the compression bonding tool is, for example, preferably 100°C to 250°C.

The pressure in the compression bonding is preferably 50 N/cm² to 1000 N/cm², and more preferably 100 N/cm² to 500 N/cm².

The temperature of the heat-shrinkable plastic element 40a in the compression bonding is preferably 80°C to 200°C according to the material thereof though.

### <Composite container 10A>

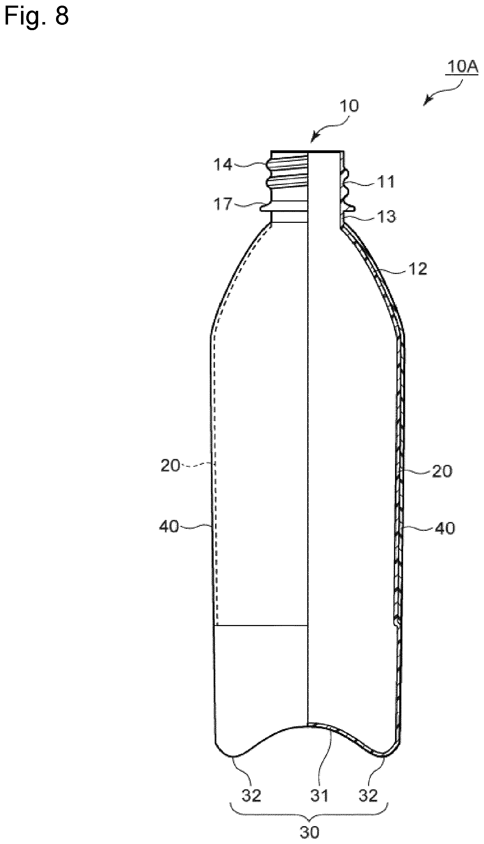

A composite container 10A according to the present invention is a blow-molded product of the composite preform 70, and as shown in Figs. 8 to 10, has a feature of including the container body 10, and a heat-shrinkable plastic element 40 that is fit to be disposed on the outside of the container body 10.

The container body 10 includes, as shown in Figs. 8 to 10, the mouth part 11, the neck part 13, which is disposed underneath the mouth part 11, the shoulder part 12, which is disposed underneath the neck part 13, the body part 20, which is disposed underneath the shoulder part 12, and the bottom part 30, which is disposed underneath the body part 20.

In one embodiment, the mouth part 11 has a screw part 14 that is to be screwed into a cap not shown, and a flange part 17 that is disposed underneath the screw part 14.

In one embodiment, the neck part 13 is positioned between the flange part 17 and the shoulder part 12, and has approximately a cylindrical shape having approximately a uniform diameter. The shoulder part 12 is positioned between the neck part 13 and the body part 20, and has a shape such that a diameter thereof is gradually enlarging from the neck part 13 side toward the body part 20 side.

In one embodiment, the body part 20 has a cylindrical shape having approximately a uniform diameter as a whole. The present invention is not limited to this. The body part 20 may have a polygonal cylindrical shape such as a quadrangular cylindrical shape and an octagonal cylindrical shape, or may have a tubular shape having a horizontally cross section not uniform from the top towards the bottom.

The body part 20 of the container body 10 shown in Figs. 8 to 10 has approximately a flat surface. The present invention is not limited to this. Roughness by a panel, groove, or the like may be formed on the body part 20.

In one embodiment, the bottom part 30 has a recess part 31 positioned at the center, and a ground connection part 32 that is disposed around this recess part 31. The shape of the bottom part 30 is not particularly limited either, but may be a petaloid bottom shape, a round bottom shape, or the like according to the content to fill.

Part of the container body 10 which corresponds to the body part 20 can be thinned to be, for example, approximately 50 µm to 250 µm, as not limited to this though. Further, the container body 10 can have a weight of 10 g to 20 g when, for example, the content of the container body 10 is 500 mL, as not limited to this though.

The container body 10 may be formed of a bottle having a total capacity of, for example, 100 mL to 2000 mL. Or, the container body 10 may be a large bottle having a total capacity of, for example, 10 L to 60 L.

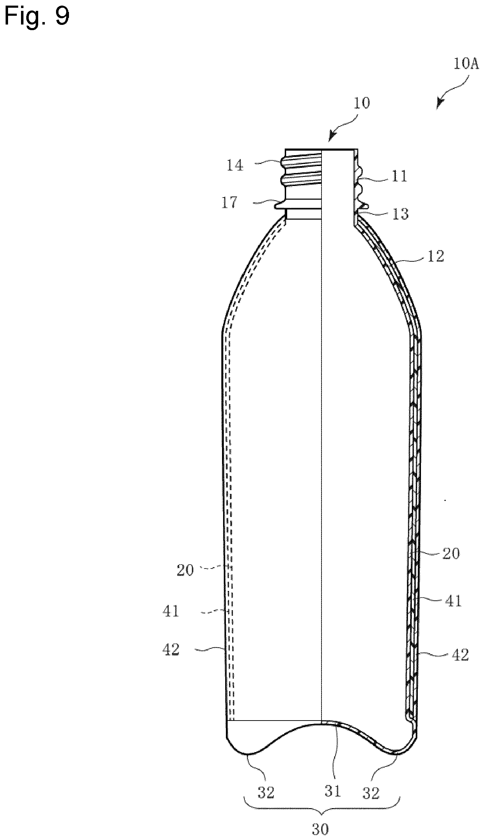

As shown in Figs. 8 and 9, the heat-shrinkable plastic element 40 can be disposed so that the shoulder part 12 and the body part 20 of the container body 10, excluding the mouth part 11, the neck part 13, and the bottom part 30, are covered therewith.

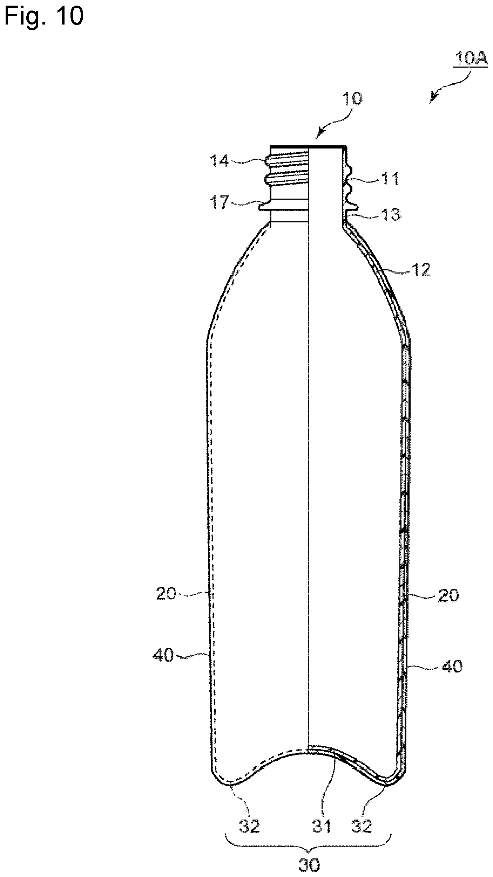

As described above, the heat-shrinkable plastic element 40a is thermocompression-bonded at the one end thereof, and thereafter blow-molded, which can lead to the structure of the heat-shrinkable plastic element 40a such that the bottom part 30 of the container body 10 is covered therewith (see Fig. 10).

The heat-shrinkable plastic element 40 can have a thickness of, for example, approximately 5 µm to 100 µm in a situation where the heat-shrinkable plastic element 40 is attached to the container body 10, as not limited to this though.

Since not welded or adhered to the container body 10, the heat-shrinkable plastic element 40 can be separated (released) and removed from the container body 10.

As the method of separating (releasing) the heat-shrinkable plastic element 40 from the container body 10, for example, the heat-shrinkable plastic element 40 can be cut off using a cutting tool etc.; or the heat-shrinkable plastic element 40 is provided with a cutting-plane line in advance, and can be released along this cutting-plane line. The forgoing method makes it possible to separate and remove the heat-shrinkable plastic element 40 from the container body 10, which makes it possible to recycle the container body 10 colorless and transparent as the conventional.

### <Method for producing composite container 10A>

A method for producing the composite container 10A includes the steps of: heating the composite preform 70; and blow-molding the heated composite preform 70 in a metal mold for blow molding, to integrally expand the preform 10a and the heat-shrinkable plastic element 40a.

In one embodiment, the method according to the present invention includes forming an image on the heat-shrinkable plastic element 40 after the blow molding.

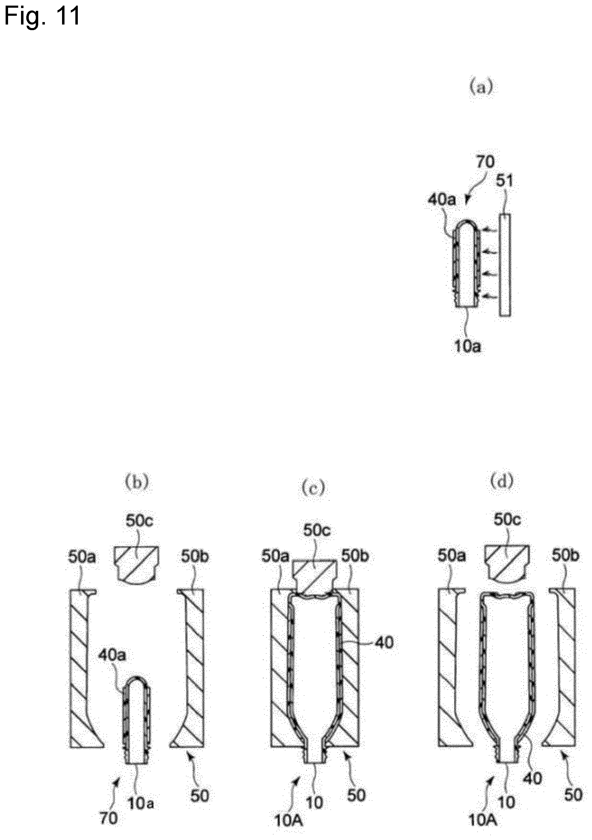

Hereinafter the method for producing the composite container 10A according to the present invention will be described in more detail based on Fig. 11(a) to 11(d).

First, the composite preform 70 is heated by a heating apparatus 51 (see Fig. 11(a)). At this time, the composite preform 70 is heated by the heating apparatus 51 uniformly in the circumferential direction as rotating in a state where the mouth part 11a faces the bottom. The heating temperature of the preform 10a and the heat-shrinkable plastic element 40a in this heating step may be, for example, 90°C to 130°C.

This heating can be suitably carried out using infrared radiation, hot air, etc.

Next, the composite preform 70 heated by the heating apparatus 51 is fed into a metal mold for blow molding 50 (see Fig. 11(b)).

The composite container 10A is molded using this metal mold for blow molding 50.

In one embodiment, the metal mold for blow molding 50 is formed of a pair of body metal molds 50a and 50b that are separated from each other, and a bottom metal mold 50c (see Fig. 11(b)). In Fig. 11(b), the pair of body metal molds 50a and 50b is open therebetween, and the bottom metal mold 50c is raised up. In this state, the composite preform 70 is inserted between the pair of body metal molds 50a and 50b.

Next, after the bottom metal mold 50c lowered down, the pair of body metal molds 50a and 50b is closed, to form the metal mold for blow molding 50, which is hermetically sealed by the pair of body metal molds 50a and 50b, and the bottom metal mold 50c. Next, air is injected into the preform 10a, and the composite preform 70 is subjected to biaxial stretch blow molding. This makes it possible to obtain the container body 10 from the preform 10a in the metal mold for blow molding 50 (see Fig. 11(c)). During this, the body metal molds 50a and 50b are heated to 30°C to 80°C, and the bottom metal mold 50c is cooled to 5°C to 25°C. At this time, the preform 10a and the heat-shrinkable plastic element 40a of the composite preform 70 are integrally expanded in the metal mold for blow molding 50. This causes the preform 10a and the heat-shrinkable plastic element 40a to be shaped so as to integrally have a shape corresponding to the inner face of the metal mold for blow molding 50.

As described above, the composite container 10A including the container body 10, and the heat-shrinkable plastic element 40 disposed on the outer face of the container body 10 can be obtained.

Next, as shown in Fig. 11(d), the pair of body metal molds 50a and 50b, and the bottom metal mold 50c are separated from each other, and the composite container 10A is taken out of the metal mold for blow molding 50.

### Examples

Next, the present invention will be further described in detail with reference to examples. The present invention is not limited to these examples.

### <Example 1>

A mixture of 95 mass% Himilan 1706 (manufactured by DU PONT-MITSUI POLYCHEMICALS CO., LTD., MFR: 0.9 g/10 min., storage modulus at 25°C: 3.8×10⁸ Pa) as (A) an ionomer resin, and 5 mass% WINTEC WFX4TA (manufactured by Japan Polypropylene Corporation, metallocene polypropylene, MFR: 7.0 g/10 min., storage modulus at 25°C: 1.0×10⁹ Pa) as (B) an olefin resin was melt-extruded by a single screw extruder using an annular die, to be molded into a non-elongated tube having an inner diameter of 16.6 mm, and next this non-elongated tube was heated by hot water, and pressurized by compressed gas from the inside thereof, to be elongated, and thus a heat-shrinkable plastic element having a cylindrical shape without a bottom was made. The heat-shrinkable plastic element had an inner diameter of 28.7 mm, and a thickness of 307 µm.

### <Example 2>

A mixture of 95 mass% Himilan 1706 as (A) the ionomer resin, and 5 mass% WINTEC WFX4TA as (B) the olefin resin used for outermost layers, a 100 mass% polyolefin adhesive resin (ADMER SF731 manufactured by Mitsui Chemicals, Inc) as adhesive layers, and a mixture of a 100 mass% ethylene-vinyl alcohol copolymer (EVAL SP482B manufactured by Kuraray Co., Ltd) as a gas-barrier layer for a middle layer were each melt-extruded by a single screw extruder using a three-kind five-layer annular die, and were molded into a non-elongated tube having an inner diameter of 18.3 mm, and next this non-elongated tube was heated by hot water, and pressurized by compressed gas from the inside thereof, to be elongated, and thus a heat-shrinkable plastic element having a cylindrical shape without a bottom was made. The heat-shrinkable plastic element had an inner diameter of 28.7 mm, and a thickness of 345 µm (each outermost layer: 132 µm, each adhesive layer: 17 µm, middle layer: 47 µm).

### <Comparative Example 1>

A mixture of 95 mass% Himilan 1855 (manufactured by DU PONT-MITSUI POLYCHEMICALS CO., LTD., MFR: 1.0 g/10 min., storage modulus at 25°C: 1.2×10⁸ Pa) as (A) the ionomer resin, and 5 mass% WINTEC WFX4TA as (B) the olefin resin was melt-extruded by a single screw extruder using an annular die, to be molded into a non-elongated tube having an inner diameter of 16.6 mm, and next this non-elongated tube was heated by hot water, and pressurized by compressed gas from the inside thereof, to be elongated, and thus a heat-shrinkable plastic element having a cylindrical shape without a bottom was made. The heat-shrinkable plastic element had an inner diameter of 28.7 mm, and a thickness of 298 µm.

### < Comparative Example 2>

A mixture of 100 mass% Himilan 1706 as (A) the ionomer resin was melt-extruded by a single screw extruder using an annular die, to be molded into a non-elongated tube having an inner diameter of 16.9 mm, and next this non-elongated tube was heated by hot water, and pressurized by compressed gas from the inside thereof, to be elongated, and thus a heat-shrinkable plastic element having a cylindrical shape without a bottom was made. The heat-shrinkable plastic element had an inner diameter of 28.7 mm, and a thickness of 310 µm.

### <Storage modulus>

The storage modulus at 25°C of a test piece of each heat-shrinkable plastic element obtained in the examples and comparative examples was measured by the method conforming to JIS K7244-4. The measurement results are shown together in Table 1.

### <Dynamic and static friction coefficients>

The dynamic and static friction coefficients between each heat-shrinkable plastic element having a cylindrical shape without a bottom, which was obtained in the examples and comparative examples, and a preform as described above were measured at 23°C by the method conforming to JIS K7125.

Specifically, the heat-shrinkable plastic element having a cylindrical shape without a bottom was cut open, to prepare a heat-shrinkable plastic element having a size of 40 mm × 200 mm. A preform made from polyethylene terephthalate that was cut to be in the form of a semicircular column (55 mm in length × 22 mm in width × 11 mm in radius) was also prepared. The heat-shrinkable plastic element having a cylindrical shape without a bottom was fixed on a horizontal test table so that the inner face side thereof faced upwards. As a cut face of the preform made from polyethylene terephthalate in the form of a semicircular column faced the top, an outer face side of the preform was placed on the heat-shrinkable plastic element. Force was linearly applied in the vertical direction of the preform made from polyethylene terephthalate, to measure the dynamic and static friction coefficients.

### <Specific gravity>

The specific gravity of each heat-shrinkable plastic element obtained in the examples and comparative examples was measured at 23°C by the method conforming to JIS Z8807.

### <Insertability test>

A preform having a cylindrical shape with a bottom shown in Figs. 3 and 4 which was formed from polyethylene terephthalate (PET) was made using an injection molding machine. The preform had an outer diameter of 26 mm.

A bottom part side of the preform, which was made as the foregoing, was inserted via an opening part of one end part of each heat-shrinkable plastic element having a cylindrical shape without a bottom shown in Figs. 3 and 4, which was obtained in the examples and comparative examples, and the time until the bottom part of the preform was exposed from the other end part was counted to be evaluated according to the following criteria. The evaluation results are shown together in Table 1.

### (Criteria)

A: the time was shorter than 0.5 seconds: the preform was easily inserted into the heat-shrinkable plastic element.

NG: the time was at least 0.5 seconds.

### [Table 1]

**(Table 1)**

| | Storage modulus (Pa) | Dynamic friction coefficient | Static friction coefficient | Specific gravity | Insertability |
|---|---|---|---|---|---|
| Example 1 | 5.30×10⁸ | 0.51 | 0.576 | 0.96 | A |
| Example 2 | 7.44×10⁸ | 0.48 | 0.52 | 0.98 | A |
| Comparative Example 1 | 1.91×10⁸ | 0.55 | 0.67 | 0.96 | NG |
| Comparative Example 2 | 3.69×10⁸ | 1.236 | 1.23 | 0.96 | NG |

### Reference Signs List

10 container body
10A composite container
10a preform
11 mouth part
11a mouth part
12 shoulder part
13 neck part
20 body part
20a body part
30 bottom part
30a bottom part
40 heat-shrinkable plastic element (after blow molding)
40a heat-shrinkable plastic element (before blow molding)
50 metal mold for blow molding
70 composite preform

## Claims

1. A heat-shrinkable plastic element (40a) that is disposed on at least part of an outside of a preform (10a), the preform (10a) including a mouth part (11a), a body part (20a) linked to the mouth part (11a), and a bottom part (30a) linked to the body part (20a), the heat-shrinkable plastic element (40a) comprising:
at least a layer (41a) containing (A) an ionomer resin and (B) an olefin resin as essential constituents,
wherein the heat-shrinkable plastic element (40a) has a storage modulus at 25°C of at least 4.0×10⁸ Pa, and
a dynamic friction coefficient between the heat-shrinkable plastic element (40a) and the preform (10a) is at most 1.1.

2. The heat-shrinkable plastic element (40a) according to claim 1, wherein (A) the ionomer resin has a storage modulus at 25°C of at least 1.5×10⁸ Pa.

3. The heat-shrinkable plastic element (40a) according to claim 1 or 2, wherein the heat-shrinkable plastic element (40a) has a specific gravity lower than 1.0.

4. The heat-shrinkable plastic element (40a) according to any one of claims 1 to 3, wherein
a static friction coefficient between the heat-shrinkable plastic element (40a) and the preform (10a) is at most 1.1.

5. The heat-shrinkable plastic element (40a) according to any one of claims 1 to 4, wherein
the layer (41a) contains (A) the ionomer resin in an amount more than 60 mass% and at most 99 mass%.

6. The heat-shrinkable plastic element (40a) according to any one of claims 1 to 5, wherein
the heat-shrinkable plastic element (40a) has a storage modulus at 25°C of 4.0×10⁸ to 1.0×10⁹ Pa.

7. The heat-shrinkable plastic element (40a) according to any one of claims 1 to 6, wherein (B) the olefin resin is a polypropylene resin.

8. The heat-shrinkable plastic element (40a) according to claim 7, wherein
the polypropylene resin has a melt flow rate of 4 to 9 g/10 min. (temperature: 230°C, load: 21.17 N), the melt flow rate being measured conforming to ISO1133.

9. The heat-shrinkable plastic element (40a) according to claim 7 or 8, wherein
the polypropylene resin has a storage modulus at 25°C of 7.0×10⁸ to 2.0×10⁹ Pa.

10. The heat-shrinkable plastic element (40a) according to any one of claims 1 to 9, wherein
the heat-shrinkable plastic element (40a) has a shrinkage of 3 to 20% in a machine direction (MD), and a shrinkage of 30 to 50% in a transverse direction (TD) with respect to the machine direction.

11. The heat-shrinkable plastic element (40a) according to any one of claims 1 to 10, wherein
the layer (41a) containing (A) the ionomer resin and (B) the olefin resin has a thickness of 200 to 500 µm.

12. The heat-shrinkable plastic element (40a) according to any one of claims 1 to 10, wherein
the heat-shrinkable plastic element (40a) includes the layer (41a) containing (A) the ionomer resin and (B) the olefin resin, a gas-barrier layer, and another layer (41a) containing (A) the ionomer resin and (B) the olefin resin in order from an inside thereof.

13. The heat-shrinkable plastic element (40a) according to claim 12, wherein
the heat-shrinkable plastic element (40a) further includes adhesive layers between the layers (41a) each containing (A) the ionomer resin and (B) the olefin resin, and the gas-barrier layer.

14. The heat-shrinkable plastic element (40a) according to claim 12 or 13, wherein
the layers (41a) each containing (A) the ionomer resin and (B) the olefin resin have a thickness of 40 to 200 µm.

15. The heat-shrinkable plastic element (40a) according to any one of claims 12 to 14, wherein the gas-barrier layer has a thickness of 20 to 60 µm.

16. A composite preform (70) comprising:
a preform (10a) that includes a mouth part (11a), a body part (20a) linked to the mouth part (11a), and a bottom part (30a) linked to the body part (20a); and
the heat-shrinkable plastic element (40a) according to any one of claims 1 to 15, the heat-shrinkable plastic element (40a) being fit to be disposed on an outside of the preform (10a).

17. A composite container (10A) that is a blow-molded product of the composite preform (70) according to claim 16, the composite container (10A) comprising:
a container body (10) including a mouth part (11), a neck part (13) disposed underneath the mouth part (11), a shoulder part (12) disposed underneath the neck part (13), a body part (20) disposed underneath the shoulder part (12), and a bottom part (30) disposed underneath the body part (20); and
a heat-shrinkable plastic element (40a) that is fit to be disposed on an outside of the container body (10).

## Patentansprüche

1. Wärmeschrumpfbares Kunststoffelement (40a), das auf mindestens einem Teil einer Außenseite eines Vorformlings (10a) angeordnet ist, wobei der Vorformling (10a) einen Mundteil (11a), einen (20a) Körperteil, verbunden mit dem Mundteil (11a), und einen Bodenteil (30a), verbunden mit dem Körperteil (20a), einschließt, wobei das wärmeschrumpfbare Kunststoffelement (40a) umfasst:
mindestens eine Schicht (41a), enthaltend als wesentliche Bestandteile (A) ein lonomerharz und (B) ein Olefinharz,
wobei das wärmeschrumpfbare Kunststoffelement (40a) einen Speichermodul bei 25°C von mindestens 4,0×10⁸ Pa aufweist, und
ein dynamischer Reibungskoeffizient zwischen dem wärmeschrumpfbaren Kunststoffelement (40a) und dem Vorformling (10a) höchstens 1,1 beträgt.

2. Wärmeschrumpfbares Kunststoffelement (40a) nach Anspruch 1, wobei (A) das lonomerharz einen Speichermodul bei 25°C von mindestens 1,5×10⁸ Pa aufweist.

3. Wärmeschrumpfbares Kunststoffelement (40a) nach Anspruch 1 oder 2, wobei das wärmeschrumpfbare Kunststoffelement (40a) ein spezifisches Gewicht von weniger als 1,0 aufweist.

4. Wärmeschrumpfbares Kunststoffelement (40a) nach einem der Ansprüche 1 bis 3, wobei
ein Haftreibungskoeffizient zwischen dem wärmeschrumpfbaren Kunststoffelement (40a) und dem Vorformling (10a) höchstens 1,1 beträgt.

5. Wärmeschrumpfbares Kunststoffelement (40a) nach einem der Ansprüche 1 bis 4, wobei
die Schicht (41a) (A) das lonomerharz in einer Menge von mehr als 60 Masse-% und höchstens 99 Masse-% enthält.

6. Wärmeschrumpfbares Kunststoffelement (40a) nach einem der Ansprüche 1 bis 5, wobei
das wärmeschrumpfbare Kunststoffelement (40a) einen Speichermodul bei 25°C von 4,0×10⁸ bis 1,0×10⁹ Pa aufweist.

7. Wärmeschrumpfbares Kunststoffelement (40a) nach einem der Ansprüche 1 bis 6, wobei (B) das Olefinharz ein Polypropylenharz ist.

8. Wärmeschrumpfbares Kunststoffelement (40a) nach Anspruch 7, wobei
das Polypropylenharz eine Schmelzflussrate von 4 bis 9 g/10 Min. (Temperatur: 230°C, Belastung: 21,17 N) aufweist, wobei die Schmelzflussrate gemäß ISO1133 gemessen wird.

9. Wärmeschrumpfbares Kunststoffelement (40a) nach Anspruch 7 oder 8, wobei
das Polypropylenharz einen Speichermodul bei 25°C von 7,0 × 10⁸ bis 2,0× 10⁹ Pa aufweist.

10. Wärmeschrumpfbares Kunststoffelement (40a) nach einem der Ansprüche 1 bis 9, wobei
das wärmeschrumpfbare Kunststoffelement (40a) eine Schrumpfung von 3 bis 20 % in Maschinenrichtung (MD) und eine Schrumpfung von 30 bis 50 % in Querrichtung (TD) bezüglich der Maschinenrichtung aufweist.

11. Wärmeschrumpfbares Kunststoffelement (40a) nach einem der Ansprüche 1 bis 10, wobei
die Schicht (41a), enthaltend (A) das lonomerharz und (B) das Olefinharz, eine Dicke von 200 bis 500 µm aufweist.

12. Wärmeschrumpfbares Kunststoffelement (40a) nach einem der Ansprüche 1 bis 10, wobei
das wärmeschrumpfbare Kunststoffelement (40a) die Schicht (41a), enthaltend (A) das lonomerharz und (B) das Olefinharz, eine Gasbarriereschicht und eine weitere Schicht (41a), enthaltend (A) das lonomerharz und (B) das Olefinharz, in der Reihenfolge von innen einschließt.

13. Wärmeschrumpfbares Kunststoffelement (40a) nach Anspruch 12, wobei
das wärmeschrumpfbare Kunststoffelement (40a) weiter Klebeschichten zwischen den Schichten (41a), enthaltend jeweils (A) das lonomerharz und (B) das Olefinharz, und der Gasbarriereschicht einschließt.

14. Wärmeschrumpfbares Kunststoffelement (40a) nach Anspruch 12 oder 13, wobei
die Schichten (41a), enthaltend jeweils (A) das lonomerharz und (B) das Olefinharz, eine Dicke von 40 bis 200 µm aufweisen.

15. Wärmeschrumpfbares Kunststoffelement (40a) nach einem der Ansprüche 12 bis 14, wobei die Gasbarriereschicht eine Dicke von 20 bis 60 µm aufweist.

16. Verbundvorformling (70), umfassend:
einen Vorformling (10a), der einen Mundteil (11a), einen mit dem Mundteil (11a) verbundenen Körperteil (20a) und einen mit dem Körperteil (20a) verbundenen Bodenteil (30a) umfasst; und
das wärmeschrumpfbare Kunststoffelement (40a) nach einem der Ansprüche 1 bis 15, wobei das wärmeschrumpfbare Kunststoffelement (40a) dazu geeignet ist, auf einer Außenseite des Vorformlings (10a) angeordnet zu werden.

17. Verbundbehälter (10A), der ein blasgeformtes Produkt des Verbundvorformlings (70) nach Anspruch 16 ist, wobei der Verbundbehälter (10A) umfasst:
einen Behälterkörper (10), der ein Mundteil (11), ein unter dem Mundteil (11) angeordnetes Halsteil (13), ein unter dem Halsteil (13) angeordnetes Schulterteil (12), ein unter dem Schulterteil (12) angeordnetes Körperteil (20) und ein unter dem Körperteil (20) angeordnetes, unteres Teil (30) einschließt; und
ein wärmeschrumpfbares Kunststoffelement (40a), das dazu geeignet ist, an einer Außenseite des Behälterkörpers (10) angeordnet zu werden.

## Revendications

1. Élément plastique thermorétractable (40a) qui est disposé sur au moins une partie d'un extérieur d'une préforme (10a), la préforme (10a) incluant une partie de goulot (11a), une partie de corps (20a) reliée à la partie de goulot (11a), et une partie inférieure (30a) reliée à la partie de corps (20a), l'élément plastique thermorétractable (40a) comprenant :
au moins une couche (41a) contenant (A) une résine ionomère et (B) une résine d'oléfine en tant que constituants essentiels,
dans lequel l'élément plastique thermorétractable (40a) a un module de stockage à 25 °C d'au moins 4,0×10⁸ Pa, et
un coefficient de friction dynamique entre l'élément plastique thermorétractable (40a) et la préforme (10a) est d'au plus 1,1.

2. Élément plastique thermorétractable (40a) selon la revendication 1, dans lequel (A) la résine ionomère a un module de stockage à 25 °C d'au moins 1,5×10⁸ Pa.

3. Élément plastique thermorétractable (40a) selon la revendication 1 ou 2 , dans lequel l'élément plastique thermorétractable (40a) a une gravité spécifique inférieure à 1,0.

4. Élément plastique thermorétractable (40a) selon l'une quelconque des revendications 1 à 3, dans lequel
un coefficient de friction statique entre l'élément plastique thermorétractable (40a) et la préforme (10a) est d'au plus 1,1.

5. Élément plastique thermorétractable (40a) selon l'une quelconque des revendications 1 à 4, dans lequel
la couche (41a) contient (A) la résine ionomère en une quantité supérieure à 60 % en masse et d'au plus 99 % en masse.

6. Élément plastique thermorétractable (40a) selon l'une quelconque des revendications 1 à 5, dans lequel
l'élément plastique thermorétractable (40a) a un module de stockage à 25 °C de 4,0×10⁸ Pa à 1,0×10⁹ Pa.

7. Élément plastique thermorétractable (40a) selon l'une quelconque des revendications 1 à 6, dans lequel (B) la résine d'oléfine est une résine de polypropylène.

8. Élément plastique thermorétractable (40a) selon la revendication 7, dans lequel la résine de polypropylène a un indice de fluidité de 4 à 9 g/10 min (température : 230 °C, charge : 21,17 N), l'indice de fluidité étant mesuré conformément à ISO1133.

9. Élément plastique thermorétractable (40a) selon la revendication 7 ou 8, dans lequel
la résine de polypropylène a un module de stockage à 25 °C de 7,0×10⁸ Pa à 2,0x10⁹ Pa.

10. Élément plastique thermorétractable (40a) selon l'une quelconque des revendications 1 à 9, dans lequel
l'élément plastique thermorétractable (40a) a un rétrécissement de 3 à 20 % dans une direction de machine (MD), et un rétrécissement de 30 à 50 % dans une direction transversale (TD) par rapport à la direction de machine.

11. Élément plastique thermorétractable (40a) selon l'une quelconque des revendications 1 à 10, dans lequel
la couche (41a) contenant (A) la résine ionomère et (B) la résine d'oléfine a une épaisseur de 200 à 500 µm.

12. Élément plastique thermorétractable (40a) selon l'une quelconque des revendications 1 à 10, dans lequel
l'élément plastique thermorétractable (40a) inclut la couche (41a) contenant (A) la résine ionomère et (B) la résine d'oléfine, une couche barrière gazeuse et une autre couche (41a) contenant (A) la résine ionomère et (B) la résine d'oléfine dans l'ordre depuis un intérieur de celui-ci.

13. Élément plastique thermorétractable (40a) selon la revendication 12, dans lequel
l'élément plastique thermorétractable (40a) inclut en outre des couches adhésives entre les couches (41a) contenant chacune (A) la résine ionomère et (B) la résine d'oléfine, et la couche barrière gazeuse.

14. Élément plastique thermorétractable (40a) selon la revendication 12 ou 13, dans lequel
les couches (41a) contenant chacune (A) la résine ionomère et (B) la résine d'oléfine ont une épaisseur de 40 à 200 µm.

15. Élément plastique thermorétractable (40a) selon l'une quelconque des revendications 12 à 14, dans lequel la couche barrière gazeuse a une épaisseur de 20 à 60 µm.

16. Préforme composite (70) comprenant :
une préforme (10a) qui inclut une partie de goulot (11a), une partie de corps (20a) reliée à la partie de goulot (11a), et une partie inférieure (30a) reliée à la partie de corps (20a) ; et
l'élément plastique thermorétractable (40a) selon l'une quelconque des revendications 1 à 15, l'élément plastique thermorétractable (40a) étant ajusté pour être disposé sur un extérieur de la préforme (10a).

17. Récipient composite (10A) qui est un produit moulé par soufflage de la préforme composite (70) selon la revendication 16, le récipient composite (10A) comprenant :
un corps de récipient (10) incluant une partie de goulot (11), une partie de col (13) disposée en dessous de la partie de goulot (11), une partie d'épaule (12) disposée en dessous de la partie de col (13), une partie de corps (20) disposée en dessous de la partie d'épaule (12), et une partie inférieure (30) disposée en dessous de la partie de corps (20) ; et
un élément plastique thermorétractable (40a) qui est ajusté pour être disposé sur un extérieur du corps de récipient (10).
